(19) **Europäisches Patentamt**

**European Patent Office**

**Office européen des brevets**

(11) **EP 1 130 748 A1**

(12) **DEMANDE DE BREVET EUROPEEN**

(43) Date de publication:
**05.09.2001 Bulletin 2001/36**

(51) Int Cl.⁷: $H02K\ 21/22$, $H02K\ 21/24$, $H02K\ 1/16$

(21) Numéro de dépôt: **01105189.3**

(22) Date de dépôt: **02.03.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **02.03.2000 FR 0002658**

(71) Demandeurs:
• **Gillonnier, Julien**
**94260 Fresnes (FR)**
• **Gillonnier, Nicolas**
**94260 Fresnes (FR)**

(72) Inventeurs:
• **Gillonnier, Julien**
**94260 Fresnes (FR)**
• **Gillonnier, Nicolas**
**94260 Fresnes (FR)**

(74) Mandataire: **Ballot, Paul Denis Jacques**
**Cabinet Ballot**
**9, boulevard de Strasbourg**
**83000 Toulon (FR)**

(54) **Machine électrique à flux transversal et aux tôles rayonnantes**

(57) L'invention concerne un dispositif moteur ou générateur, à excitation permanente multipolaire à pôles externes et à courant continu ou commuté, monté à rotation autour d'un axe (A) et comprenant :

- un noyau interne de rotation comprenant une série de minces tôles planes (12) entre lesquelles sont déposés les conducteurs d'excitation ou d'induit (14), chaque tôle plane étant disposée suivant un demi-plan radial, les tôles minces étant espacées étroitement à des positions angulaires successives, les conducteurs ayant des parties actives s'étendant sensiblement radialement ou parallèlement à l'axe (A) dans chaque espace séparant les tôles, et
- une culasse externe de rotation (10) comprenant une pluralité de cavaliers aimantés (11, 21, 31) en matériau magnétique présentant une pluralité de paires de pôles magnétiques (13-15) disposés de façon alternée dans une pluralité de secteurs angulaires successifs (11), chaque secteur angulaire contenant deux pôles magnétiques opposés (N-S) disposés respectivement dans les deux parties d'extrémités axiales du secteur angulaire, le nombre de cavaliers étant égal au nombre pair de secteurs angulaires, chaque cavalier magnétique comportant deux parties distales (13-15) parallèles présentant respectivement deux faces d'extrémités polaires opposées (N-S) perpendiculaires à un demi-plan radial, de sorte que l'association de cavaliers magnétiques de la culasse et de tôles correspondantes du noyau forme des circuits magnétiques à

entrefers (17) dans lesquels le flux magnétique (H) circule sensiblement suivant un demi-plan radial.

Fig.1A

EP 1 130 748 A1

# Description

La présente invention concerne le domaine des dispositifs moteurs à induction électrique et, par complément, des générateurs à induction électrique de type magnéto- ou dynamo-électriques, ces dispositifs pouvant fonctionner en courants continus, commutés ou découpés, voire commandés à l'instar des commandes de moteurs pas à pas.

Les moteurs classiques à induction électrique comportent un stator externe inducteur et un rotor interne axial qui porte des bobinages d'induit. Le stator est constitué de pièces polaires, qui peuvent être des électroaimants ou des aimants permanents, et le rotor porte classiquement des conducteurs bobinés sur des pièces d'induit en forme de champignon.

Les inconvénients majeurs des moteurs et dynamos électriques classiques sont d'être lourds et encombrants relativement à leur puissance.

La miniaturisation des aimants a cependant permis de généraliser l'emploi d'aimants permanents pour remplacer les électroaimants dans le stator inducteur, en diminuant le poids et l'encombrement des moteurs et dynamos électriques.

Malgré ces améliorations, les moteurs classiques ont encore l'inconvénient de manquer de couple par rapport à leur encombrement, les conducteurs devant être concentrés dans un faible espace, près de l'axe rotatif.

On connaît maintenant des moteurs à induction électrique dans lequel la partie mobile, rotative, correspond à la partie externe inductrice qui constitue alors le rotor, tandis que la partie axiale interne bobinée est fixe et constitue le stator.

Le document FR-A-2 753 316 décrit ainsi un dispositif moteur à stator interne bobiné et à rotor externe multipolaire dans lequel les bobinages d'induit sont disposés à la périphérie du stator dans l'espace entrefer séparant le cylindre ou la couronne interne en matériau magnétique du stator et les masses polaires du rotor.

Bien que le dispositif soit opérationnel, une telle structure nécessite des entrefers d'épaisseur importante pour loger les conducteurs bobinés du stator, ce qui a l'inconvénient d'être délicat à mettre en oeuvre et de nuire à l'efficacité électromagnétique, donc d'obérer le couple et le rendement du moteur.

L'objet de la présente invention est de réaliser un dispositif moteur ou générateur à induction électrique sans les inconvénients précités.

Un objectif général de l'invention, est de réaliser un dispositif moteur ou générateur présentant une puissance et un couple importants pour un encombrement réduit et un poids allégé.

Un objectif particulier de l'invention est plus précisément de réaliser un dispositif moteur ou générateur à culasse externe multipolaire et à noyau interne bobiné présentant un fort rendement électromagnétique en réduisant au plus mince l'intervalle d'entrefer.

Succinctement, ces objectifs sont atteints en prévoyant d'après l'invention, un moteur/générateur, dans lequel les pièces d'induit du noyau interne sont constituées d'ailettes en tôle à deux branches en forme de lettre U, ou alternativement, en forme de lettre T, les conducteurs étant bobinés autour de chaque branche du U ou du T des ailettes, tandis que les pièces inductrices complémentaires de la culasse externe sont constituées de cavaliers magnétiques en forme de lettre Π ou de lettre C renversée. Une telle disposition permet avantageusement d'adapter exactement les extrémités polaires des cavaliers en Π ou en C de la culasse avec les extrémités des ailettes de tôles en U ou en T du noyau, ce qui réduit l'intervalle d'entrefer et maximise le rendement du moteur. L'autre avantage essentiel de la disposition externe des pôles sur la culasse et du bobinage des conducteurs au bout des branches des ailettes en U ou en T du noyau (interne) est de démultiplier le couple et la puissance du moteur, tout en facilitant le logement des conducteurs dans le moteur.

L'invention est réalisée avec un dispositif moteur ou générateur, à excitation permanente multipolaire à pôles externes et à courant continu ou commuté, monté à rotation autour d'un axe et comprenant :

- une culasse externe de rotation comprenant une pluralité de paires de pôles magnétiques disposés de façon alternée dans des secteurs angulaires successifs, le nombre de paires de pôles et de secteurs angulaires étant un nombre pair, chaque secteur angulaire contenant deux pôles magnétiques opposés disposés respectivement dans les deux parties d'extrémités axiales du secteur angulaire, de façon transversale, de sorte que le flux magnétique circule sensiblement suivant des demi-plans radiaux, et,
- un noyau interne de rotation comprenant une pluralité de conducteurs d'excitation ou d'induit bobinés,

caractérisé en ce que,

- le noyau interne de rotation comprend une série de minces tôles planes entre lesquelles sont déposés les conducteurs d'excitation ou d'induit, chaque tôle plane étant disposée suivant un demi-plan radial, les tôles minces étant espacées étroitement à des positions angulaires successives, les conducteurs ayant des parties actives s'étendant sensiblement radialement ou parallèlement à l'axe dans chaque espace séparant les tôles, et
- la culasse externe de rotation comprend une pluralité de cavaliers aimantés en matériau magnétique disposés dans la pluralité de secteurs angulaires, le nombre de cavaliers étant égal au nombre pair de secteurs angulaires, chaque cavalier magnétique comportant deux parties distales parallèles présentant respectivement deux faces d'extrémités polaires opposées perpendiculaires à un demi-plan radial, de sorte que l'association de cavaliers magnétiques de la culasse et de tôles correspondantes du noyau forme des circuits magnétiques à entrefers dans lesquels le flux magnétique circule sensiblement suivant un demi-plan radial.

Selon un premier mode de réalisation, chaque association d'un cavalier magnétique de la culasse et d'une tôle plane du noyau forme un circuit magnétique disposé selon un demi-plan radial, le circuit magnétique comportant deux entrefers dans lesquels le flux magnétique circule radialement.

De préférence, suivant le premier mode de réalisation, chaque cavalier magnétique de la culasse comporte :

- une première partie ou pièce distale polaire dirigée radialement vers l'axe du dispositif et présentant une face d'extrémité polaire perpendiculaire à la direction radiale, reliée à,
- une portion ou barre médiane s'étendant parallèlement à l'axe, reliée à,
- une seconde partie ou pièce distale polaire s'étendant radialement vers l'axe du dispositif et présentant une face d'extrémité polaire opposée perpendiculaire à la direction radiale.

De préférence, suivant le premier mode de réalisation, chaque tôle plane du noyau comporte :

- un premier pan latéral distal s'étendant radialement, relié à,
- un pan médian s'étendant axialement, relié à,
- un second pan latéral distal s'étendant radialement parallèlement au premier pan latéral distal.

Il est prévu, suivant le premier mode de réalisation que les conducteurs d'excitation ou d'induit déposés entre les tôles ont des parties actives s'étendant sensiblement parallèlement à l'axe.

Il est prévu que des nappes de conducteurs appariées sont bobinées respectivement autour des premiers et seconds pans latéraux distals de plusieurs tôles d'induit.

Avantageusement, il est prévu qu'au moins une couronne dentée, montée à une extrémité de l'axe du stator, maintient les fines tôles d'induit en position angulaire et que de la résine imprègne au moins partiellement les espaces entre les fines tôles d'induit au coeur du stator.

Selon un deuxième mode de réalisation, chaque association d'un cavalier magnétique de la culasse et d'une tôle plane du noyau forme un circuit magnétique disposé selon un demi-plan radial, le circuit magnétique comportant deux entrefers dans lesquels le flux magnétique circule sensiblement parallèlement à l'axe.

De préférence, suivant le deuxième mode de réalisation, chaque cavalier magnétique de la culasse comporte :

- une première pièce ou partie distale polaire dirigée parallèlement à l'axe et présentant une face d'extrémité polaire perpendiculaire à la direction axiale, reliée à,
- une première branche distale s'étendant radialement vers l'axe du dispositif, reliée à,
- une portion médiane s'étendant parallèlement à l'axe, reliée à,
- une seconde branche distale s'étendant radialement vers l'axe du dispositif, reliée à
- une seconde pièce ou partie distale polaire dirigée parallèlement à l'axe vers la première pièce ou partie distale polaire et présentant une face d'extrémité polaire opposée perpendiculaire à la direction axiale.

Selon un troisième mode de réalisation, chaque association de deux cavaliers magnétiques de la culasse et de tôles planes correspondantes du noyau forme un circuit magnétique disposé selon un plan tangentiel, le circuit magnétique comportant quatre entrefers dans lesquels le flux magnétique circule sensiblement parallèlement à l'axe.

De préférence, selon le troisième mode de réalisation, la culasse comprend deux séries de cavaliers magnétiques alternés en opposition face à face et disposées séparément dans les deux parties d'extrémités axiales des secteurs angulaires, chaque cavalier magnétique s'étendant sur deux secteurs angulaires perpendiculairement à l'axe et comprenant :

- une première pièce ou partie d'extrémité polaire dirigée parallèlement à l'axe et présentant une face polaire perpendiculaire à la direction axiale face au noyau interne, reliée à
- une portion médiane s'étendant selon un segment de cercle perpendiculaire à l'axe du dispositif, reliée à
- une seconde pièce ou partie d'extrémité polaire dirigée parallèlement à la première pièce ou partie d'extrémité polaire et présentant une face polaire opposée perpendiculaire à la direction axiale face au noyau interne.

De préférence, suivant les deuxième et troisième modes de réalisation, chaque tôle plane comporte :

- un premier pan latéral distal s'étendant parallèlement à l'axe et s'achevant par un premier bord d'extrémité radial, et
- un second pan latéral distal s'étendant parallèlement à l'axe et s'achevant par un second bord d'extrémité radial.

Il est prévu selon les deuxième et troisième modes de réalisation que les conducteurs d'excitation ou d'induit déposés entre les tôles ont des parties actives s'étendant sensiblement radialement.

Avantageusement, le stator comporte une pièce de support saillant radialement de l'axe pour maintenir les tôles d'induit en augmentant le rayon de positionnement des tôles, de préférence une pièce circulaire pleine disposée sur l'axe, comportant des fentes radiales, les tôles d'induit étant montées respectivement dans les fentes radiales.

Il est prévu que le nombre de cavaliers magnétiques est une puissance entière de deux.

Selon une alternative, le noyau interne, montée mobile en rotation, forme le rotor et la culasse externe, montée fixe en rotation, forme le stator, du moteur ou du générateur.

Selon une autre alternative, le noyau interne est monté fixe en rotation, et la culasse externe est montée mobile en rotation.

Une application avantageuse de l'invention consiste à utiliser la culasse externe du dispositif comme moyeu d'une pièce d'entraînement rotative, telle qu'une roue, une poulie, un galet ou un volant ou tout particulièrement une roue de cycle.

Ces objectifs, caractéristiques et avantages de l'invention seront exposés plus en détail dans la description suivante des modes de réalisation, faite à titre exemplatif, en relation avec les figures jointes parmi lesquelles :

- la figure 1A représente une demi-coupe sagittale et une demi-vue latérale d'un dispositif moteur à culasse externe multipolaire avec des cavaliers magnétiques en forme de Π et à noyau interne bobiné sur des tôles d'induit sagittales en forme de U, selon le premier mode de réalisation de l'invention,
- la figure 1B représente une coupe transversale du dispositif moteur de la figure 1A, selon la ligne de coupe B-B,
- la figure 1C représente un détail grossi de la figure 1B montrant la disposition des tôles et des conducteurs d'induit,
- la figure 2A représente une demi-coupe sagittale et une demi-vue latérale d'un dispositif moteur à culasse externe multipolaire avec des cavaliers magnétiques en forme de C et à noyau interne bobiné sur des tôles d'induit en forme de T, selon le deuxième mode de réalisation de l'invention,
- la figure 2B représente une coupe transversale schématique du dispositif moteur de la figure 2A, montrant dans le cadran supérieur gauche une partie de coupe en plan médian, dans le cadran supérieur droit, une partie de coupe selon le demi-plan supérieur B-B avec un schéma de principe de bobinage, dans le cadran inférieur droit, une vue en coupe avec bobinage selon le demi-plan inférieur B-B et dans le cadran inférieur gauche, une vue en coupe sans bobinage selon B-B,

- la figure 3A représente une demi-coupe sagittale et une demi-vue latérale d'un dispositif à moteur à culasse externe multipolaire avec des cavaliers magnétiques en forme de secteur angulaire montés en tête de moteur et à noyau interne bobiné sur des tôles d'induit de forme rectangulaire, selon le troisième mode de réalisation de l'invention, et
- la figure 3B représente une coupe transversale schématique du dispositif moteur de la figure 3A, avec la même décomposition schématique en cadrans de la figure 2B.

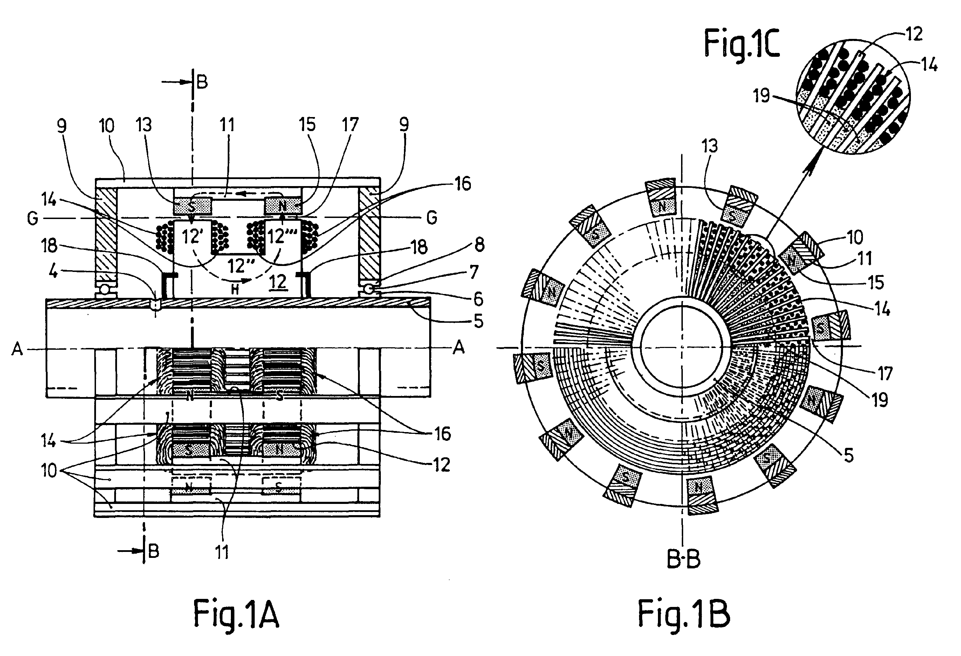

Comme le montre la vue d'ensemble de la figure 1A, il est prévu que le dispositif selon l'invention comporte une culasse externe 9-10 qui forme une cage globalement cylindrique montée à rotation autour d'un axe fixe formé par exemple d'un arbre tubulaire 5. De préférence, la culasse externe est rotative et constitue une sorte de rotor externe.

A l'intérieur de la culasse, le noyau interne du dispositif porte une série de tôles 12 en forme de U disposées comme des ailettes rayonnantes autour de l'arbre 5. De préférence, le noyau interne à ailettes 12 est fixe et constitue le stator interne du dispositif.

L'invention prévoit de monter des cavaliers magnétiques 11 sur la culasse externe 9-10 en les disposant suivant des génératrices sur le pourtour cylindrique 10 du rotor.

Cavalier magnétique désigne dans la présente, une pièce d'aimant ou d'électroaimant en matériau magnétique (composé de fer, cobalt, nickel, etc.), comprenant une barre médiane et deux jambes ou branches latérales en forme de fer à cheval, pouvant être disposée au-dessus ou à cheval par rapport aux ailettes du stator.

Les cavaliers sont de préférence en matériau magnétique présentant une perméabilité et/ou une rémanence élevée, tel que du fer doux.

De préférence, les cavaliers magnétiques aimantés sont réalisés en accolant une ou deux petites pièces d'aimant permanent à chaque extrémité d'un barreau ou d'un cadre ouvert en matériau ferromagnétique de façon que chaque extrémité du cavalier présente des polarités opposées. Les progrès réalisés dans la conception des aimants permet d'obtenir des cavaliers présentant une très forte aimantation avec des aimants présentant un encombrement et un poids considérablement réduits. L'adoption de tels aimants puissants et légers permet avantageusement d'envisager de disposer les pôles d'aimantation permanente sur la partie rotative du moteur avec une inertie réduite ou encore d'obtenir de façon inhabituelle un moteur à rotor externe.

Alternativement, les cavaliers en matériau magnétique peuvent être formés d'une portion de cadre en ferrite ouvert et dotés de bobinages inducteurs pour constituer des électroaimants destinés à donner une excitation magnétique continue au moteur ou au générateur.

Dans le cas d'une réalisation d'un dispositif générateur selon l'invention, les cavaliers servant d'électroaimants peuvent avoir soit une excitation électrique indépendante, soit être autoexcités d'après le principe de Werner Von Siemens.

Les tôles du noyau interne du dispositif sont par contre, de préférence en matériau magnétique doux présentant une rémanence la plus faible possible, comme les tôles en ferrite de cadre de transformateur ou du fer étamé.

Dans l'exemple de réalisation préféré, les tôles sont en alliage fer-silicium à grains orientés.

Selon le premier mode de réalisation illustré figure 1, les cavaliers magnétiques 11 ont une forme de lettre U renversée ou de lettre grecque Π et sont disposés dans le prolongement des tôles 12 en forme de U du noyau interne.

Dans l'exemple de la figure 1, chaque cavalier 11 comporte une portion médiane linéaire disposée suivant une génératrice du cylindre de la culasse, donc parallèlement à l'axe 5 du dispositif.

Chaque cavalier comporte de préférence deux branches polaires 13 et 15 faisant saillie orthogonalement de la portion médiane 11, dans la direction radiale, vers l'axe 5 du stator. Les deux branches 13 et 15 se terminent par deux faces polaires opposées, Nord et Sud, chacune étant disposée vis-à-vis d'une extrémité respective 12',12''' de tôle 12 du stator.

Il est prévu selon l'invention, que les cavaliers qui se succèdent à la périphérie de la culasse externe présentent des aimantations alternées, c'est-à-dire que le cavalier 11 présentant une face 13 Nord et une face 15 Sud est suivi et précédé par des cavaliers 11 présentant une face 13 Sud et une face 15 Nord etc.. D'autres dispositions d'aimantation peuvent aussi être adoptées, par exemple une alternance d'aimantation de deux cavaliers en deux cavaliers ou une période de plusieurs cavaliers.

Le dispositif selon l'invention, comporte donc un nombre pair **P =2 N** de cavaliers magnétiques 11, chaque cavalier comportant une paire de pôles opposés Nord et Sud. Le dispositif comporte donc un nombre de pôles égal à **2 P = 4 N**.

Ce nombre et cette disposition polaire définissent des secteurs angulaires, au nombre de **P = 2 N**, chaque secteur angulaire s'étendant axialement et contenant deux pôles magnétiques opposés N et S, correspondant à un cavalier généralement. Comme le montrent les figures, les deux pôles magnétiques opposés N et S sont disposés respectivement dans chaque moitié distale (ou chaque partie d'extrémité axiale) du secteur angulaire de façon à former un flux magnétique H "transversal" à la direction de mouvement rotatif du moteur ou plus précisément de sorte que le flux magnétique circule sensiblement suivant un demi-plan radial.

Dans une première forme de réalisation non illustrée, les cavaliers ont une forme de lettre grecque minuscule π, la portion médiane en matériau magnétique se prolongeant suivant la génératrice G-G, de chaque côté, au-delà des branches radiales. La longueur du cavalier est alors nettement supérieure à la dimension axiale du noyau interne 12 et les deux extrémités de la portion médiane peuvent venir se fixer sur deux flasques 9 montés à rotation sur l'arbre 5, de part et d'autre du noyau interne 12.

Dans la forme de réalisation préférée illustrée figure 1, la culasse externe ressemble à une cage cylindrique comportant une série de barreaux 10 non-magnétiques fixés parallèlement à l'axe 5 à la circonférence des deux flasques 9. Les flasques 9 sont montés à rotation sur deux paliers 6-8, à glissement ou à roulement 7, immobilisés en translation sur l'arbre 5.

La culasse du dispositif peut ainsi tourner librement autour de l'axe ou de l'arbre fixe 5 du stator, sa légèreté réduisant avantageusement son inertie.

Les barreaux 10 peuvent être notamment des tubes en aluminium, de section carrée par exemple.

Les cavaliers magnétiques 11 sont alors fixés dans la partie centrale intermédiaire des barreaux face à l'axe 5 du dispositif.

Dans cette forme de réalisation préférée, il est prévu que les cavaliers ont une forme de lettre grecque majuscule Π, la longueur de la portion médiane 11 fixée au barreau 10 étant limitée à la dimension axiale des tôles 12 du noyau interne ; les deux branches polaires 13 et 15 du cavalier font donc saillie radialement aux deux extrémités de la portion médiane 11 du cavalier. Les deux extrémités Nord et Sud N-S des branches polaires 13 et 15 de chaque cavalier 11 du rotor sont ainsi disposées vis-à-vis des deux extrémités correspondantes des tôles 12 du stator.

La réalisation des cavaliers 11 peut s'effectuer à partir d'éléments métalliques accolés à des aimants. La portion médiane 11 du cavalier peut par exemple être une plaque de fer doux ou d'un autre matériau doux magnétiquement et rigide mécaniquement.

L'aimantation du cavalier est alors obtenue en solidarisant deux blocs d'aimants 13 et 15 en sens opposé sur la plaque 11 magnétique.

D'après une variante, le cavalier peut être réalisé en accolant un seul aimant à une extrémité d'un élément métallique en forme de lettre L, l'autre extrémité de l'élément ayant une forme saillante identique à l'aimant permanent opposé.

D'après une autre variante, la portion médiane 11 des cavaliers peut être une plaque d'aimant permanent 11 sur laquelle sont solidarisées deux blocs saillants 13 et 15 en matériau magnétique.

Alternativement, il est possible d'aimanter de façon permanente des pièces d'un seul tenant en forme de lettre grecque Π ou de lettre U pour former des cavaliers.

Selon une autre alternative de réalisation, les cavaliers magnétiques peuvent être constitués d'électroaimants, chaque cavalier étant composé d'une pièce magnétique en U ou en Π, d'un seul tenant ou en plusieurs parties autour de laquelle s'enroulent les bobinages inducteurs.

Maintenant, pour former l'induit du dispositif, selon l'invention, le noyau interne comporte une série de tôles 12 planes fixées autour de l'arbre 5 comme des ailettes rayonnantes en corolle, chaque tôle 12 étant disposée suivant un demi-plan sagittal, c'est-à-dire un demi-plan radial passant par l'axe A du dispositif.

Un circuit magnétique se forme donc entre chaque cavalier magnétique 11 de la culasse externe et la ou les tôles 12 correspondantes disposées vis-à-vis des pôles 13 et 15 du cavalier.

Il est prévu selon l'invention que les tôles 12 de faible épaisseur sont conformées pour s'adapter exactement aux extrémités des branches polaires des cavaliers en réduisant les entrefers au plus mince pour favoriser le champ magnétique moteur.

Diverses formes de tôles correspondant à cette définition peuvent être mises en oeuvre.

Il est possible par exemple de réaliser le moteur en associant les cavaliers en U ou en Π avec des tôles longiformes (c'est-à-dire de forme allongée, de préférence rectiligne), en particulier des tôles rectangulaires, dont les pans latéraux sont de simples extensions avec ou sans décrochement par rapport au pan médian. Les conducteurs peuvent alors être bobinés autour du pan médian des tôles.

De préférence, suivant le premier mode de réalisation du dispositif selon l'invention, les tôles du noyau interne comportent deux pans latéraux 12' et 12''' s'étendant radialement joint par un pan médian 12'' s'étendant axialement.

Correspondamment, comme illustré figure 1A, les tôles 12 planes du noyau interne ont avantageusement une forme de lettre U adaptée à la forme en U ou en Π des cavaliers magnétiques 11 de la culasse externe.

Chaque tôle 12 comporte ainsi de préférence un premier pan latéral 12' de dimension axiale égale ou supérieure à celle d'une branche polaire 13 d'un cavalier 11 et un deuxième pan latéral 12''' de dimension axiale correspondant à celle de l'autre branche polaire 15 du cavalier. Les deux pans latéraux 12' et 12''' sont reliés ensemble par un pan médian 12'' de dimension suffisante pour permettre la circulation du champ magnétique H.

Dans le premier mode de réalisation, chaque tôle 12 en U et le cavalier 11 en Π qui lui est associé forment un circuit magnétique inscrit dans un demi-plan et présentant deux entrefers 17 radiaux, c'est-à-dire que le flux magnétique H (matérialisé par une ligne pointillée sur la figure 1A) est dirigé radialement dans chacun des entrefers 17 séparant les extrémités de la tôle 12 des pôles 13 et 15 du cavalier 11. La dimension radiale des entrefers 17 est la plus fine possible, les entrefers étant par contre étendus dans le plan tangentiel, ce qui permet d'obtenir une forte induction H.

Cette forme de tôle en U optimise avantageusement la circulation du flux magnétique entre les tôles du noyau interne et les cavaliers magnétiques de la culasse externe.

En outre, elle permet avantageusement de bobiner des nappes de conducteurs autour de chaque pan latéral des tôles en profitant de l'espace libre entre les branches du U. De façon particulièrement avantageuse, les nappes de conducteurs d'induit sont ainsi bobinés autour de deux axes radiaux dirigés vers le centre des pôles 13 et 15 des cavaliers 11.

Le nombre et l'épaisseur maxima des tôles 12 sont déterminés par la circonférence externe de l'arbre 5.

De préférence, l'arbre 5 présente un diamètre relativement important par rapport au diamètre externe de la culasse externe pour pouvoir maximiser la surface externe du noyau interne occupée par les tôles magnétiques et minimiser la dispersion des lignes de champ entre la culasse et le noyau.

D'autre part, il est prévu de minimiser l'épaisseur des tôles, ce qui empêche avantageusement l'apparition de courants de Foulcault nuisibles au rendement électromagnétique du moteur.

L'épaisseur des tôles est de l'ordre d'un dixième de millimètre à quelques millimètres. De préférence, plusieurs tôles sont accolées en groupe pour former une tôle feuilletée d'épaisseur plus importante.

Selon un exemple de réalisation, des tôles de 0,3 mm d'épaisseur sont groupées par nombre de 3 ou 4 pour former un groupe de tôles feuilletées de 0,9 à 1,2 mm d'épaisseur totale.

Il convient donc de disposer d'un nombre de tôles le plus élevé possible, compte-tenu de la limitation par la circonférence de l'arbre 5, pour minimiser la dispersion des lignes de champ.

Dans certaines réalisations, il est possible de disposer le maximum de tôles serrées les unes contre les autres au niveau de leur liaison avec l'arbre 5.

Toutefois, il est préférable d'éviter le contact entre les tôles pour éviter l'apparition de courants de Foulcault.

L'invention prévoit donc avantageusement que les tôles sont étroitement espacées pour être isolées les unes des autres.

Selon le mode de réalisation préféré, comme le montre le détail de la figure 1C, les conducteurs d'excitation ou d'induit 14 sont déposés dans l'intervalle séparant chaque tôle 12 ou groupe de tôles feuilletées, des tôles voisines. De façon avantageuse, la nappe de conducteurs 14 insérée entre deux tôles 12 successives, maintient constant l'écartement des tôles entre elles. L'épaisseur des conducteurs est généralement comprise entre 0,1 mm et 10 mm, de préférence de l'ordre de quelques dixièmes à quelques millimètres. On peut adopter par exemple des fils de cuivre de 0,3 mm de diamètre avec un gainage de 0,7 mm de diamètre externe. L'écartement des tôles est consécutivement de l'ordre de quelques dixièmes à quelques millimètres. Selon une réalisation avantageuse, les tôles sont maintenues en place autour de l'arbre 5 par une ou deux couronnes dentées 18 montées aux extrémités de l'arbre 5, les dents de la couronne s'insérant respectivement entre les tôles pour les maintenir précisément en position angulaire et éviter de les mettre en contact.

Il est aussi prévu de façon alternative ou cumulative, que le coeur du stator est imprégné de résine 19 durcie, ce qui permet avantageusement de solidariser les tôles 12 les unes par rapport aux autres, tout en les isolant électriquement.

Sur la figure 1C, la vue de détail des tôles 12 du stator montre que les espaces séparant les tôles 12 sont de préférence remplis partiellement de résine 19, la portion médiane interne des tôles 12 en U au contact de l'arbre 5 étant enduite de résine, tandis que les portions latérales externes des tôles 12 en U sont exemptes de résine et peuvent recevoir librement les conducteurs bobinés 14. Alternativement les tôles 12 peuvent être complètement enduites de résine, les conducteurs 14 étant noyés dans la résine isolante imprégnant le stator.

Les conducteurs sont de préférence bobinés par nappes et s'inscrivent approximativement dans des plans perpendiculaires à la direction radiale.

Chaque boucle d'une nappe conductrice s'enroule de préférence autour de plusieurs pans latéraux de tôles de sorte que l'aire de la boucle 14 ne soit pas restreinte à la section d'un pan de tôle 12' mais atteigne une aire de l'ordre de la surface d'extrémité polaire 13 du cavalier 11.

Il est important de noter que dans le premier mode de réalisation de la figure 1A,B,C, le circuit magnétique H s'inscrit dans un demi-plan radial, matérialisé par chaque tôle 12, avec la particularité que dans les entrefers 17 et dans les branches 12' et 12''' des tôles 12, le flux magnétique H circule sensiblement radialement.

Les conducteurs 14 et 16 qui sont parcourus par un courant électrique et qui sont enroulés autour des pans des tôles latéraux 12' et 12''' se trouvant sous les pôles magnétiques 13 et 15, comportent des brins actifs disposés entre les tôles, le long de génératrices G-G parallèles à l'axe A-A.

Cette disposition essentielle du dispositif selon l'invention, lui confère avantageusement un couple et un rendement particulièrement élevés. En effet, la Force de Lorentz qui s'exerce sur les conducteurs de longueur **L** parcourus par un courant **I** et plongés dans un champ magnétique **H**, suit l'expression vectorielle :

$$F = I.L \wedge H$$

La force **F** est dirigée perpendiculairement à la direction des conducteurs **L** et à la direction du champ magnétique **H** et elle est maximale lorsque les conducteurs **L** et le flux magnétique **F** sont perpendiculaires.

On peut observer que dans tous les modes de réalisation de l'invention, la disposition des brins actifs des conducteurs dans un demi-plan radial entre les tôles et dans une direction perpendiculaire au flux H inscrit aussi dans le demi-plan radial, permet d'obtenir de façon essentielle une force motrice maximale tangentielle à la direction de rotation, ce qui maximalise le couple et l'efficacité du moteur.

Diverses dispositions et interconnexions de nappes conductrices peuvent être envisagées, telle qu'une succession de nappes décalées progressivement et alimentées séquentiellement pour déplacer progressivement la polarité du stator, ou bien une interconnexion des nappes en série ou en parallèle.

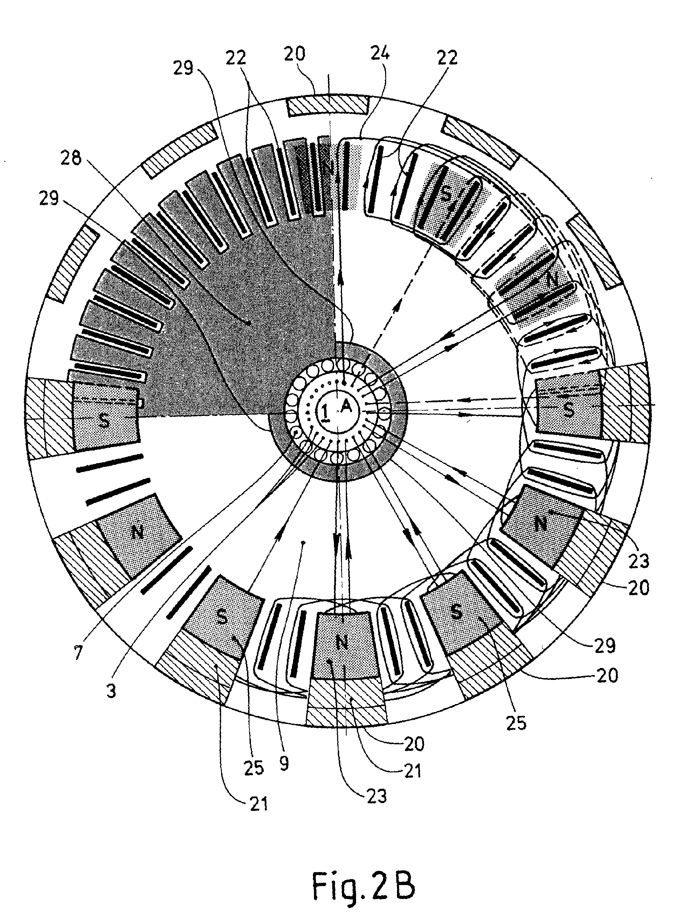

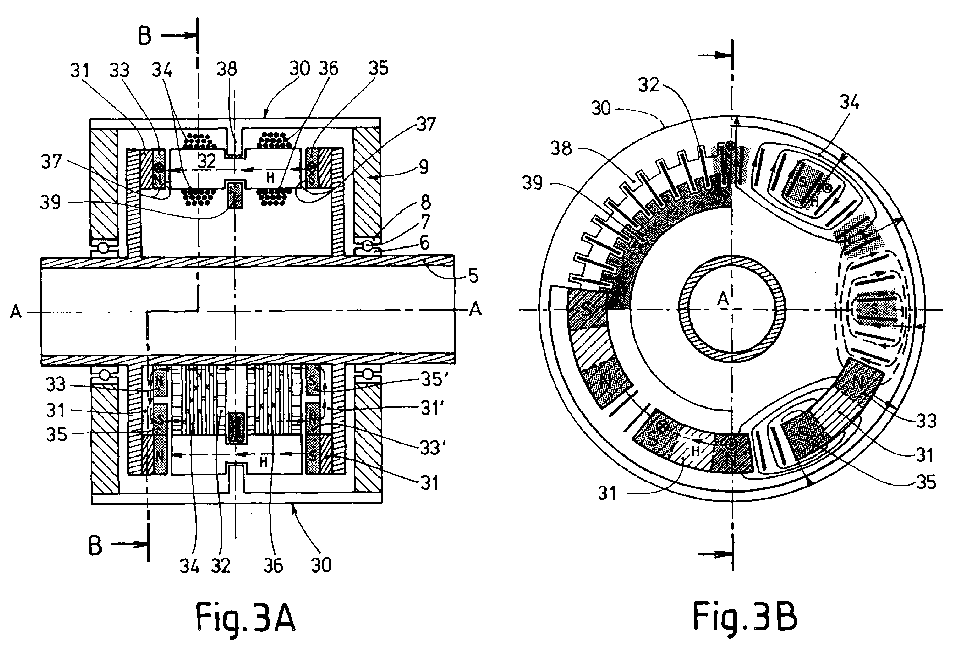

Des dispositions et interconnexions de nappes de conducteurs sont détaillées ci-après en relation avec les modes de réalisation des figures 2B et 3B, qui peuvent être transposées à ce premier mode de réalisation.

Le dispositif moteur ou générateur selon l'invention est destiné à fonctionner en courant continu ou éventuellement en courants découpés en créneaux à l'instar d'un moteur pas à pas.

Il est donc prévu d'ajouter des moyens de commutation permettant d'inverser le sens de circulation des courants dans les nappes de conducteurs du dispositif.

Les moyens de commutation peuvent être constitués par un système de bagues et de balais de type connu, par des commutateurs, des relais, ou des circuits de commutation à semiconducteurs (transistors, effet de champ, triac) ou encore par une alimentation à découpage. De tels dispositifs de l'état de la technique, connus de l'homme de métier, ne sont pas l'objet de l'invention et ne seront pas décrits plus amplement dans la présente.

En fonctionnement, suivant le principe d'Oersted, les nappes de conducteurs 14 et 16 entourant les branches latérales 12' et 12''' des tôles 12 sont parcourus par des courants opposés et sont plongés dans des champs magnétiques H opposés générés par les pôles 13-15 Nord et Sud des cavaliers magnétiques, ce qui fait apparaître des forces tangentielles sur les tôles 12, si bien que le noyau interne du dispositif est mis en mouvement.

Ensuite, il est prévu que le système de commutation inverse le sens des courants dans les conducteurs 14 et 16 dès que le rotor a effectué une rotation correspondant au pas angulaire séparant deux cavaliers. Ainsi, le courant s'inverse dans les conducteurs du noyau interne dès que la polarité des cavaliers s'inverse si bien que le mouvement de rotation du dispositif s'entretient.

Alternativement, le noyau interne 12 peut être monté fixe en rotation, l'arbre 5 étant immobilisé alors que la culasse externe est montée libre en rotation sur les paliers 7. De façon curieuse, le dispositif selon l'invention forme alors un moteur ou générateur à culasse externe rotative ou à rotor externe.

Diverses dispositions connues de l'homme de métier permettent alors de faire fonctionner un tel moteur à vitesse constante, variable, progressive ou en mode de fonctionnement pas à pas en commutant convenablement la polarité des courants dans les conducteurs.

En outre, il apparaît clairement qu'un tel dispositif peut fonctionner en générateur électrique, la mise en rotation du rotor 9-10 et des cavaliers inducteurs 11 permettant de faire apparaître des courants dans les conducteurs 14, 16 du stator 12. Il suffit alors de collecter les courants par un système de bagues et de balais ou un système équivalent.

Un tel générateur peut fonctionner aussi bien sur le mode magnétoélectrique ou dynamoélectrique selon le procédé connu de Siemens, les cavaliers étant constitués d'électro-aimants.

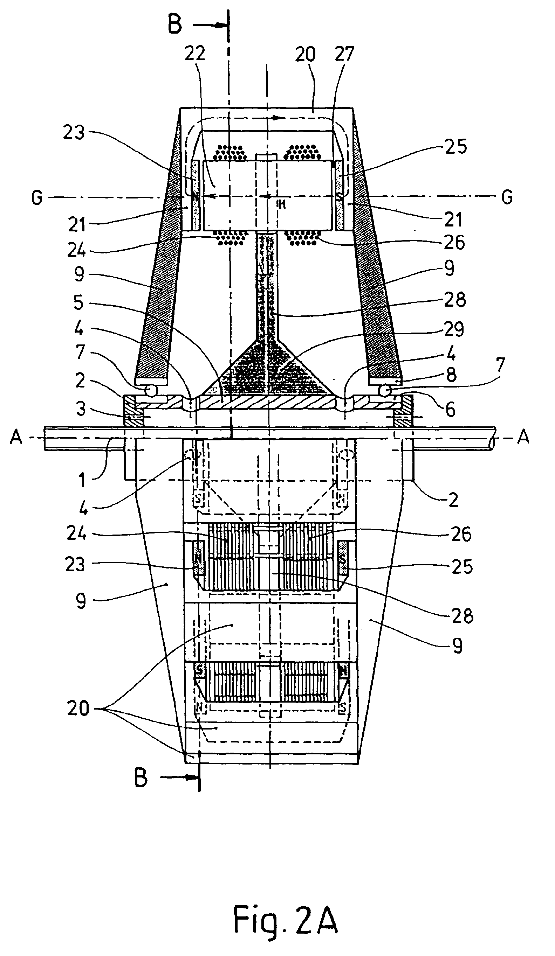

Les figures 2A et 2B illustrent un deuxième mode de réalisation de dispositif selon l'invention, dont seuls les différences avec le premier mode de réalisation vont être exposées ci-après.

Dans le second mode de réalisation, les cavaliers magnétiques 20-21 de la culasse externe enjambent complètement la corolle de tôles 22 en ailettes rayonnantes du noyau interne en les encadrant. Les cavaliers magnétiques 20-21 ont de préférence une forme de lettre C renversée, les extrémités 23 et 25 des cavaliers 21 étant placées vis à vis des flancs latéraux des tôles 22 du noyau interne.

Il est prévu en effet que chaque cavalier 20,21 présente des extrémités polaires opposées 23,25 planes et disposées de part et d'autre en tête des tôles 22 du noyau interne.

Consécutivement, selon le deuxième mode de réalisation, chaque cavalier comporte une portion médiane 20, s'étendant de façon "transversale" suivant une génératrice G-G du dispositif, la longueur de la portion 20 étant supérieure à la dimension axiale des tôles 22 du noyau. La portion médiane 20 se prolonge à chaque extrémité par deux branches radiales 21 orientées vers l'arbre 5 du dispositif.

Chaque branche radiale 21 se termine de préférence par une pièce polaire ou partie distale respective 23 ou 25 dirigée parallèlement à l'axe A-A. Les portions distales 23 et 25 peuvent toutefois être réduites, voire inexistantes.

De tels cavaliers magnétiques 20,21 sont de préférence réalisés en accolant deux pièces d'aimant 23 et 25 à faces parallèles sur les bords internes à l'extrémité des jambes d'un élément métallique en forme de lettre grecque majuscule Π.

D'après une variante, les cavaliers peuvent être constitués d'électro-aimants bobinés sur un cadre ou un anneau ouvert en fer doux, ferrite ou autre matériau magnétique.

D'autres variantes sont à la portée de l'homme de métier.

De façon avantageuse, la culasse du dispositif peut être achevée simplement en assemblant les flasques 9 avec les cavaliers 20, chaque cavalier ayant son premier bras 21 solidarisé radialement contre le premier flasque 9 et le second bras 21 solidarisé contre l'autre flasque 9. Il convient d'alterner les cavaliers en opposant leur polarité, cavalier par cavalier, par paires ou par groupes de plusieurs cavaliers..., le long de la périphérie de la culasse externe.

Enfin, il est préférable de prévoir un boîtier ou un capot cylindrique pour maintenir ensemble flasques et cavaliers.

Le second mode de réalisation permet d'adopter avantageusement des tôles longiformes (i.e. de forme allongée sensiblement rectiligne) à extrémités parallèles, de préférence rectangulaires donc, et de les disposer dans le prolongement précis des extrémités polaires 23 et 25 des cavaliers 20-21, selon une génératrice G-G, parallèlement à l'axe A-A du dispositif.

De façon générale, il est prévu que chaque tôle 22 comporte deux pans latéraux s'étendant parallèlement à l'axe A-A, reliés par un pan médian. Les extrémités latérales des tôles 22 sont parallèles et suivent la direction radiale.

L'association de chaque cavalier magnétique 20-21-23-25 avec la ou les tôles 22 en vis-à-vis forme ainsi un circuit magnétique, en forme de boucle plane rectangulaire ou arrondie, inscrite une fois encore dans un demi-plan radial. Le circuit magnétique présente deux entrefers 27 s'étendant suivant un plan transversal à l'axe A-A du dispositif, dans lesquels le flux magnétique H circule suivant une génératrice G-G parallèlement à l'axe A-A.

Dans le second mode de réalisation, comme le montre la figure 2B, il est prévu d'enrouler longitudinalement les nappes de conducteurs 24, 26 autour des tôles 22, entre lesquelles sont déposées les parties actives des conducteurs.

Les conducteurs 24 et 26 qui sont parcourus par un courant électrique et qui sont enroulés autour des pans latéraux des tôles 22 se trouvant vis-à-vis des pôles magnétiques 23 et 25, comportent des brins actifs disposés radialement entre les tôles 22.

A l'instar du premier mode de réalisation, la disposition radiale des brins actifs et la direction axiale du flux magnétique permet d'obtenir une force motrice résultante tangentielle à la direction de rotation, en maximalisant le couple et l'efficacité du dispositif.

De façon avantageuse, selon un tel mode de réalisation, chaque tôle 22 forme avec le cavalier 20-21 associé un circuit magnétique quasiment sans fuite, chaque face polaire 23, 25 du cavalier étant séparée de l'extrémité correspondante de tôle 22 par un infime intervalle d'entrefer 27.

Effectivement, le noyau interne ne subit aucun mouvement dans le sens axial et la dimension axiale des tôles 22 peut être ajustée à la distance axiale séparant les faces polaires 23 et 25 des cavaliers 21, distance qui est rigoureusement fixe par construction des cavaliers, ce qui permet de minimiser les entrefers 27.

Il est prévu en outre, selon le second mode de réalisation de disposer les tôles 22 à distance de l'axe 1 du noyau interne.

Une telle disposition permet avantageusement d'amplifier le couple du moteur déjà renforcé par la disposition externe des pôles du dispositif.

La figure 2 montre ainsi que les tôles 22 sont montées sur le pourtour d'une pièce 28 intermédiaire fixée à l'arbre 5. La pièce 28 est de préférence en matériau non-métallique ou en métal non-ferromagnétique, comme de l'aluminium.

Les tôles 22 peuvent être fixées sur les branches d'une pièce 28 rayonnant en étoile.

De préférence, la pièce 28 est une pièce circulaire pleine comportant une embase 29 élargie pour l'immobiliser perpendiculairement sur l'arbre 5.

Le pourtour de la pièce circulaire 28 est entaillé par de multiples fentes radiales. Chaque tôle 22 peut ainsi être insérée et fixée dans une fente radiale respective, ce qui la maintient solidement et à distance par rapport à l'arbre 5, de façon avantageuse.

En fonctionnement, les nappes de conducteurs 24 et 26 entourant respectivement les pans latéraux de tôle 22 sont parcourues par des courants complémentaires, c'est-à-dire contribuant à la constitution d'un champ magnétique dans la tôle 22 qui repousse les pôles opposés 23 et 25 du cavalier magnétique 20-21, situé en vis-à-vis, ce qui provoque le mouvement du rotor. Il est prévu que le système de commutation associé au dispositif, inverse le sens des courants dès que le cavalier magnétique en mouvement est remplacé par le suivant. Comme les cavaliers magnétiques 20-21 ont des polarités alternées, les pôles opposés du cavalier suivant sont dès lors repoussés, ce qui entretient le mouvement du moteur.

La figure 2B montre un exemple de schéma de bobinage de premières nappes de conducteurs 24 autour des tôles 22 correspondant à deux secteurs angulaires, c'est-à-dire à deux cavaliers magnétiques 20 successifs tête-bêches et présentant deux paires de pôles en opposition Nord et Sud.

Dans l'exemple de la figure 2B, le noyau interne comporte quarante-huit tôles 22 et la culasse externe comporte douze cavaliers magnétiques 20. Le secteur angulaire correspondant à un cavalier mesure donc 30 degrés.

La première nappe de conducteurs 24 couvre alors deux secteurs angulaires totalisant 60 degrés, ce qui correspond à huit tôles 22.

Le fil conducteur 24 est enroulé autour des tôles N°1 à 8, en passant dans chaque intervalle séparant deux tôles comme suit :

- en entrant, passage du fil le long de la tôle N°1, vers la périphérie, le fil allant rejoindre la tôle N°5 puis,
- passage le long de la tôle N°5, vers l'axe puis,
- passage le long de la tôle N°2, vers la périphérie

puis,
- passage le long de la tôle N°6, vers l'axe puis,
- passage le long de la tôle N°3, vers la périphérie puis,
- passage le long de la tôle N°7, vers l'axe puis,
- passage le long de la tôle N°4, vers la périphérie, et,
- passage le long de la tôle N°8, vers la sortie.

Ce bobinage de la nappe de conducteurs 24 présente ainsi quatre brins orientés vers la périphérie le long des quatre premières tôles N°1 à 4 et quatre brins orientés vers l'axe le long des quatre tôles suivantes N°5 à 8, ce qui correspond à la périodicité spatiale des pôles Nord et Sud de la série de cavaliers 20.

Une autre nappe de conducteurs, appartenant aussi à cette première catégorie, couvre les tôles N°9 à 16, et ainsi de suite, six nappes de première catégorie couvrant la totalité des quarante huit tôles N°1 à 48 du moteur de la figure 2B.

Il est prévu d'alimenter simultanément toutes les nappes appartenant à la première catégorie en disposant un système de collecteur adéquat aux extrémités 3 des conducteurs en tête du moteur ou en disposant un système d'alimentation commuté électroniquement.

Comme le montre la figure 2B, des nappes de conducteurs d'une autre catégorie peuvent être superposées à la première catégorie de nappes conductrices avec un décalage angulaire d'une demi-période spatiale (quatre tôles), d'un quart de période spatiale (deux tôles).

Il est prévu d'alimenter successivement les différentes catégories de nappes par le système de collecteur ou d'alimentation commutée, ce qui permet avantageusement de rendre progressive et d'amortir la commande du moteur.

Il apparaît en outre que le moteur peut être parfaitement commandé en mode pas-à-pas.

De préférence, le nombre de cavaliers magnétiques est une puissance entière de deux $P = 2^n$, le nombre total de pôles étant alors égal à $2.P = 2.2^n$, avec n entier.

En effet, l'agencement des bobinages des nappes de conducteur du noyau interne correspond à l'agencement des pôles de la culasse externe, ce qui permet de réaliser un moteur de puissance quasi-constante.

Cependant, en faisant varier l'interconnexion des nappes de conducteurs du noyau interne, on peut obtenir une variation de puissance. Avec un nombre de pôles et un nombre de nappes de conducteurs multiple de deux, il devient possible de faire varier la vitesse et la puissance du moteur d'un facteur deux. De façon avantageuse, avec un nombre de pôles et de nappes de conducteurs égal à une puissance entière de deux, il est possible d'obtenir une gradation de puissance et de vitesse par paliers augmentant de double en double et réduisant de moitié en moitié.

Les figures 3A et 3B illustrent un troisième mode de réalisation, similaire au deuxième mode de réalisation, dans lequel il est prévu de relier chaque paire de pôles 33-35 qui se succèdent sur le pourtour circulaire d'un flasque 9, par un cavalier magnétique 31 disposé transversalement ou circonférentiellement par rapport à l'axe A-A, au lieu de relier les pôles opposés 23 et 25 aux deux extrémités du moteur par des cavaliers magnétiques 20-21 disposés longitudinalement.

En fait, selon ce troisième mode de réalisation de l'invention illustré figure 3, chaque cavalier magnétique 31 comporte une partie médiane, rectiligne ou courbe de préférence, disposée tangentiellement ou suivant un arc de cercle transversal et centré sur l'axe A du moteur. La partie médiane du cavalier 31 a de préférence une forme de secteur de couronne. La partie médiane 31 relie deux extrémités polaires 33 et 35 qui sont disposées dans le prolongement axial des tôles d'induit 32 du stator et font de préférence saillie dans la direction génératrice.

Les cavaliers 31 sont montés régulièrement en couronne dans les parois des flasques 9, les deux pôles opposés 33 et 35 de chaque cavalier faisant saillie vers les tôles 32 au milieu du dispositif.

Deux couronnes de cavaliers 31 et 31' sont finalement montées aux deux extrémités du dispositif, en tête et en queue du rotor, les polarités des cavaliers 31 étant inversées ou décalées d'une couronne à l'autre couronne, de sorte que chaque pôle Nord 33 ou Sud 35 d'un cavalier 31 d'une couronne est disposé en face du pôle complémentaire Sud 35' ou Nord 33' du cavalier 31' correspondant de l'autre couronne.

On forme ainsi, selon le troisième mode de réalisation, des circuits magnétiques qui mettent en jeu au minimum deux cavaliers magnétiques et deux tôles magnétiques d'induit, donc quatre pôles et quatre entrefers. Les circuits magnétiques sont alors disposés de façon tangentielle par rapport à l'axe A du noyau et de la culasse circulaires du dispositif, dans ce troisième mode de réalisation.

Comme indiqué en partie inférieure de la figure 3A, chaque circuit magnétique tangentiel comprend un pôle Nord 33, relié à un pôle Sud 31, disposé en regard de tôles 32 et d'un pôle Nord opposé 33', lui-même relié par la partie médiane de l'autre cavalier 31' associé à un pôle Sud 35' qui se retrouve vis-à-vis d'autres tôles 32 et du pôle Nord 33 d'origine du circuit. Le circuit magnétique comporte donc, deux cavaliers magnétiques 31-31', quatre pôles 33,35,33',35' et quatre entrefers 37 dans lesquels le flux magnétique H circule suivant une génératrice, parallèlement à l'axe A-A.

Les nappes de conducteurs 34 et 36 sont bobinées autour des pans latéraux distals des tôles 32 en insérant les conducteurs dans les espaces séparant deux tôles successives.

Comme dans le deuxième mode de réalisation, les conducteurs 34 qui sont parcourus par un courant et qui sont situés dans le flux magnétique H longitudinal des cavaliers magnétiques, comportent des brins actifs disposés radialement entre les tôles. Avantageusement la disposition radiale des brins actifs des conducteurs entre les tôles et la direction du flux magnétique H parallèle à l'axe fournit une force motrice maximale tangentielle à la direction de rotation, ce qui maximalise le couple et l'efficacité du moteur.

La figure 3B shématise une variante de bobinage des conducteurs dans laquelle le fil conducteur de chaque nappe est enroulé comme suit :

- en entrant à la périphérie, passage du fil le long de la tôle N°5 vers l'axe A, le fil allant rejoindre la tôle N°4, puis,
- passage le long de la tôle N°4 vers la périphérie, puis,
- passage le long de la tôle N°6 vers l'axe, puis,
- passage le long de la tôle N°3 vers la périphérie, puis,
- passage le long de la tôle N°7 vers l'axe, puis,
- passage le long de la tôle N°2 vers la périphérie, puis,
- passage le long de la tôle N°8 vers l'axe, et enfin,
- passage le long de la tôle N°1 vers la sortie.

D'autres variantes ou dispositions de bobinage des conducteurs des nappes peuvent être mises en oeuvre par l'homme de métier sans sortir du cadre de la présente invention.

Dans l'exemple de réalisation de la figure 3A, il est prévu que les cavaliers magnétiques 31, en forme de secteur de couronne sont fixés sur deux montants latéraux circulaires reliés à l'arbre 5 du dispositif.

Cet ensemble qui porte les cavaliers magnétiques avec les pièces polaires inductrices forme avantageusement le rotor interne du dispositif.

De façon avantageuse, l'arbre tubulaire 5 maintient les deux flancs portant les cavaliers à une distance d'écartement fixe. L'arbre 5 et les flancs sont de préférence réalisés en matériau rigide et non magnétique, comme de l'aluminium.

Suivant cet exemple de réalisation de la figure 3A, les tôles 32 d'induit sont montées à l'intérieur d'un cylindre 30 portant une nervure annulaire 38 entaillée radialement pour insérer les tôles 32.

Les tôles sont bloquées radialement et longitudinalement en insérant au centre une bague tubulaire 39 de maintien pour achever cette réalisation.

Les trois modes de réalisation conviennent à un montage de moteur classique dans lequel le noyau interne est monté en rotation et constitue le rotor (induit) et la culasse externe, fixe, constitue le stator (inducteur), mais également à un montage inhabituel, dans lequel le noyau interne est fixe (stator interne) et la culasse externe est mobile en rotation.

Tous les modes de réalisation de dispositif selon l'invention conviennent inversement à la constitution de générateur magnéto- ou dynamo-électrique.

Le dispositif selon l'invention, convient notamment à la réalisation de générateurs alternatifs pour éolienne.

Le dispositif selon l'invention, peut être associé à un moteur thermique pour servir à la fois de démarreur et d'alternateur.

Le dispositif moteur ou générateur selon l'invention convient particulièrement à une utilisation en prise directe dans laquelle la culasse externe du dispositif constitue partiellement ou entièrement le moyeu d'une pièce de manoeuvre rotative, tel que le moyeu d'une roue, d'une poulie, d'un volant, d'un galet ou de tout autre pièce d'entraînement.

Le second mode de réalisation de dispositif selon l'invention convient précisément à une utilisation comme pièce motrice ou génératrice disposée au centre de la roue d'un cycle.

De façon particulièrement avantageuse, le moteur développe un couple important à une vitesse de rotation basse (de l'ordre de quelques dizaines à quelques centaines de tours par minute) pour un encombrement, un poids et une inertie très faibles.

Le dispositif objet de la figure 2 présente avantageusement une dimension axiale réduite, ce qui permet de l'adapter aisément dans une fourche de bicyclette ou de cyclomoteur. La culasse externe peut alors constituer le moyeu relié aux rayons de la roue du cycle.

Il est prévu que l'arbre 5 tubulaire creux du stator est traversé par l'axe ou la tige filetée 1 et serré entre deux écrous pour être immobilisé dans la fourche d'un cycle.

La figure 2 montre que l'arbre 5 et les écrous 3 sont de préférence percés pour laisser passer les connexions reliées aux nappes de conducteurs 24 et 26 du stator.

D'autres applications, modes de réalisations, variantes et améliorations apparaîtront à l'homme de métier sans sortir du cadre de la présente invention, l'objet de la protection étant défini par les revendications ci-après.

## Revendications

1. Dispositif moteur ou générateur, à excitation permanente multipolaire à pôles externes et à courant continu ou commuté, monté à rotation autour d'un axe (A) et comprenant :

   - une culasse externe de rotation (10, 20, 30) comprenant une pluralité de paires de pôles magnétiques (13-15, 23-25, 33-35) disposés de façon alternée dans des secteurs angulaires successifs (11, 21, 31), le nombre de paires de pôles et de secteurs angulaires étant un nombre pair, chaque secteur angulaire contenant deux pôles magnétiques opposés (N-S) disposés respectivement dans les deux parties d'extrémités axiales du secteur angulaire, de façon transversale, de sorte que le flux magnétique (H) circule sensiblement suivant des demi-plans radiaux, et,

   - un noyau interne de rotation (12, 22, 32) comprenant une pluralité de conducteurs (14-16, 24-26, 34-36) d'excitation ou d'induit bobinés,

   **caractérisé en ce que**,

   - le noyau interne de rotation comprend une série de minces tôles planes (12, 22, 32) entre lesquelles sont déposés les conducteurs d'excitation ou d'induit, chaque tôle plane étant disposée suivant un demi-plan radial, les tôles minces étant espacées étroitement à des positions angulaires successives, les conducteurs (14, 24, 34) ayant des parties actives s'étendant sensiblement radialement ou parallèlement à l'axe (A) dans chaque espace séparant les tôles, et

   - la culasse externe de rotation comprend une pluralité de cavaliers aimantés (11, 21, 31) en matériau magnétique disposés dans la pluralité de secteurs angulaires, le nombre de cavaliers étant égal au nombre pair de secteurs angulaires, chaque cavalier magnétique comportant deux parties distales (13-15, 21-23-25, 33-35) parallèles présentant respectivement deux faces d'extrémités polaires opposées (N-S) perpendiculaires à un demi-plan radial, de sorte que l'association de cavaliers magnétiques de la culasse et de tôles correspondantes du noyau forme des circuits magnétiques à entrefers (17, 27, 37) dans lesquels le flux magnétique (H) circule sensiblement suivant un demi-plan radial.

2. Dispositif selon la revendication 1, dans lequel chaque association d'un cavalier magnétique (11) de la culasse et d'une tôle plane (12) du noyau forme un circuit magnétique disposé selon un demi-plan radial, le circuit magnétique comportant deux entrefers (17) dans lesquels le flux magnétique (H) circule radialement.

3. Dispositif selon la revendication 1 ou 2, **caractérisé en ce que** chaque cavalier magnétique (11) de la culasse (10) comporte :

   - une première partie ou pièce distale polaire (13) dirigée radialement vers l'axe (A) du dispositif et présentant une face d'extrémité polaire (S) perpendiculaire à la direction radiale, reliée à,

   - une portion ou barre médiane (11) s'étendant parallèlement à l'axe (A), reliée à,

   - une seconde partie ou pièce distale polaire (15) s'étendant radialement vers l'axe (A) du dispositif et présentant une face d'extrémité polaire opposée (N) perpendiculaire à la direction radiale.

4. Dispositif selon l'une des revendications 1 à 3, **caractérisé en ce que** chaque tôle plane (12) du noyau comporte :

   - un premier pan latéral distal (12') s'étendant radialement, relié à,
   - un pan médian (12") s'étendant axialement, relié à,
   - un second pan latéral distal (12''') s'étendant radialement parallèlement au premier pan latéral distal (12')

5. Dispositif selon la revendication 4, **caractérisé en ce que** les conducteurs (14) d'excitation ou d'induit déposés entre les tôles (12) ont des parties actives s'étendant sensiblement parallèlement à l'axe (A).

6. Dispositif selon l'une des revendications 1 à 5, **caractérisé en ce que** au moins une couronne dentée (18), montée à une extrémité axiale (5) du noyau interne de rotation, maintient les fines tôles planes (12) en position angulaire.

7. Dispositif selon l'une des revendications 1 à 6, **caractérisé en ce que** l'espace entre les minces tôles planes (12) au coeur du noyau, est imprégné de résine (19).

8. Dispositif selon l'une des revendications 1 à 7, **caractérisé en ce que** la culasse externe de rotation est composée d'une cage comprenant :

   - deux flasques (9) montées respectivement à rotation sur paliers (6, 7, 8) aux deux extrémités de l'axe (5) du dispositif,
   - des barreaux (10) fixés parallèlement à l'axe (5, A) dans des logements ménagés régulièrement sur le pourtour des flasques, et
   - les cavaliers magnétiques (11) fixés sur les barreaux (10) face au noyau interne de rotation (12)

9. Dispositif selon la revendication 1, dans lequel chaque association d'un cavalier magnétique (21) de la culasse et d'une tôle plane (22) du noyau forme un circuit magnétique disposé selon un demi-plan radial, le circuit magnétique comportant deux entrefers (27) dans lesquels le flux magnétique (H) circule sensiblement parallèlement à l'axe (A).

10. Dispositif selon la revendication 1 ou 9, **caractérisé en ce que** chaque cavalier magnétique (20, 21) de la culasse comporte :

   - une première pièce ou partie distale polaire (23) dirigée (G) parallèlement à l'axe (A) et présentant une face d'extrémité polaire (N) perpendiculaire à la direction axiale, reliée à,
   - une première branche distale (21) s'étendant radialement vers l'axe (A) du dispositif, reliée à,
   - une portion médiane (20) s'étendant parallèlement à l'axe (A), reliée à,
   - une seconde branche distale (21) s'étendant radialement vers l'axe (A) du dispositif, reliée à
   - une seconde pièce ou partie distale polaire (25) dirigée (G) parallèlement à l'axe (A) vers la première pièce ou partie distale polaire (23) et présentant une face d'extrémité polaire opposée (S) perpendiculaire à la direction axiale.

11. Dispositif selon la revendication 1, **caractérisé en ce que** l'association de deux cavaliers magnétiques (31) de la culasse et de tôles planes (32) correspondantes du noyau forme un circuit magnétique disposé selon un plan tangentiel, le circuit magnétique comportant quatre entrefers (37) dans lesquels le flux magnétique (H) circule sensiblement parallèlement à l'axe (A).

12. Dispositif selon la revendication 1 ou 10, **caractérisé en ce que** la culasse (30) comprend deux séries de cavaliers magnétiques (31-31') alternés en opposition face à face et disposées séparément dans les deux parties d'extrémités axiales des secteurs angulaires, chaque cavalier magnétique s'étendant sur deux secteurs angulaires perpendiculairement à l'axe (A) et comprenant :

   - une première pièce ou partie d'extrémité polaire (33) dirigée parallèlement à l'axe (A) et présentant une face polaire (N) perpendiculaire à la direction axiale (A) face au noyau interne (32, 34), reliée à
   - une portion médiane (31) s'étendant selon un segment de cercle perpendiculaire à l'axe (A) du dispositif, reliée à
   - une seconde pièce ou partie d'extrémité polaire (35) dirigée parallèlement à la première pièce ou partie d'extrémité polaire (33) et présentant une face polaire opposée (S) perpendiculaire à la direction axiale (A) face au noyau interne (32, 34)

13. Dispositif selon l'une des revendications 9 à 12, **caractérisé en ce que** chaque tôle plane (22, 32) comporte :

   - un premier pan latéral distal (22') s'étendant parallèlement à l'axe (A) et s'achevant par un premier bord d'extrémité radial, et
   - un second pan latéral distal (22") s'étendant parallèlement à l'axe (A) et s'achevant par un second bord d'extrémité radial.

**14.** Dispositif selon la revendication 12, **caractérisé en ce que** les conducteurs (24, 34) d'excitation ou d'induit déposés entre les tôles (22, 32) ont des parties actives s'étendant sensiblement radialement.

**15.** Dispositif selon la revendication 13 ou 14, **caractérisé en ce que** le noyau interne de rotation comporte une pièce de support (29) en matériau non magnétique saillant radialement (28) de l'axe (5) pour maintenir les tôles planes (22) en augmentant le rayon de positionnement des tôles.

**16.** Dispositif selon l'une des revendications 9 à 15, **caractérisé en ce que** la culasse externe de rotation (20) comprend :

- deux flasques (9) montés respectivement à rotation sur paliers (6, 7, 8) aux deux extrémités respectives de l'axe (5) du dispositif,
- les cavaliers magnétiques (20, 21, 31) fixés régulièrement sur le pourtour des flasques, et
- un capot cylindrique maintenant les flasques et les cavaliers

**17.** Dispositif selon l'une des revendications 1 à 16, **caractérisé en ce que** le nombre de cavaliers magnétiques (10, 20, 30) est une puissance entière de deux.

**18.** Dispositif selon l'une des revendications 1 à 17, dans lequel le noyau interne, montée mobile en rotation, forme le rotor et la culasse externe, montée fixe en rotation, forme le stator, du moteur ou du générateur.

**19.** Dispositif selon l'une des revendications 1 à 17, dans lequel le noyau interne est monté fixe en rotation, et la culasse externe est montée mobile en rotation.

**20.** Dispositif selon la revendication 19, dans lequel la culasse externe rotative est utilisée comme moyeu d'une pièce d'entraînement rotative, notamment d'une roue, d'une poulie, d'un galet ou d'un volant.

Fig.1C

Fig.1A

Fig.1B

B-B

EP 1 130 748 A1

14

## Fig. 2A

Fig. 2B

Fig.3B

Fig.3A

## RAPPORT DE RECHERCHE EUROPEENNE

Office européen des brevets

Numéro de la demande

EP 01 10 5189

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 5 854 521 A (NOLLE EUGEN) 29 décembre 1998 (1998-12-29)<br><br>* colonne 4, ligne 3 - ligne 47; figures 2,3,5 *<br>--- | 1-6, 8-10, 13-15, 19,20 | H02K21/22 H02K21/24 H02K1/16 |
| A | DE 27 29 446 A (UNION SILS VAN DE LOO & CO) 11 janvier 1979 (1979-01-11)<br><br>* abrégé; revendications 1,2; figures 6-9 *<br>--- | 1,2,5, 9-15,19, 20 | |
| A | GB 1 541 211 A (PA MANAGEMENT CONSULT) 28 février 1979 (1979-02-28) * page 1, ligne 54 - page 2, ligne 27; revendication 1; figures 1,2 *<br>--- | 1,2, 11-13 | |
| A | DE 295 01 741 U (ZAJC FRANC ;ZAJC IVICA (SI)) 16 mars 1995 (1995-03-16) * page 14, ligne 1 - ligne 14; revendications 1-3,5,12,13; figures 7,8,9A,11 *<br>--- | 1-4,15, 20 | DOMAINES TECHNIQUES RECHERCHES (Int.Cl.7) H02K H02H |
| A | DE 196 14 862 A (ABB DAIMLER BENZ TRANSP) 6 novembre 1997 (1997-11-06) * colonne 2, ligne 8 - ligne 12 * * colonne 2, ligne 48 - ligne 53 * * colonne 3, ligne 6 - ligne 21; revendication 5; figures 1,2A,4,7 *<br>--- | 1,2 | |

-/--

Le présent rapport a été établi pour toutes les revendications

| Lieu de la recherche | Date d'achèvement de la recherche | Examinateur |
|---|---|---|
| LA HAYE | 7 juin 2001 | von Rauch, E |

EPO FORM 1503 03.82 (P04C02)

**Office européen des brevets**

# RAPPORT DE RECHERCHE EUROPEENNE

Numéro de la demande

EP 01 10 5189

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | WEH H: "DIE TRANSVERSALFLUSSMASCHINE. THE TRANSVERSE FLUX MACHINE" JAHRBUCH DER SCHIFFBAUTECHNISCHEN GESELLSCHAFT,DE,BERLIN, vol. 86, 1992, pages 68-73, XP002043271 ISSN: 0374-1222 * abrégé * * page 70, ligne 19 - ligne 27; figures 3,4,6 * | 1,3,9, 15,20 | |
| | ----- | | |
| | | | **DOMAINES TECHNIQUES RECHERCHES (Int.Cl.7)** |

Le présent rapport a été établi pour toutes les revendications

| Lieu de la recherche | Date d'achèvement de la recherche | Examinateur |
|---|---|---|
| LA HAYE | 7 juin 2001 | von Rauch, E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**       EP 01 10 5189

La présente annexe indique les membres de la famille de brevets relatifs aux documents brevets cités dans le rapport de recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

07-06-2001

| Document brevet cité au rapport de recherche | | Date de publication | Membre(s) de la famille de brevet(s) | | Date de publication |
|---|---|---|---|---|---|
| US 5854521 | A | 29-12-1998 | DE<br>FR<br>GB<br>IT<br>JP | 19532614 A<br>2733644 A<br>2300312 A,B<br>MI960826 A<br>9107672 A | 31-10-1996<br>31-10-1996<br>30-10-1996<br>27-10-1997<br>22-04-1997 |
| DE 2729446 | A | 11-01-1979 | AUCUN | | |
| GB 1541211 | A | 28-02-1979 | AUCUN | | |
| DE 29501741 | U | 16-03-1995 | US | 5744888 A | 28-04-1998 |
| DE 19614862 | A | 06-11-1997 | AU<br>BR<br>DE<br>EP<br>WO<br>JP<br>PL | 2304197 A<br>9702142 A<br>19780317 D<br>0832511 A<br>9739515 A<br>11506600 T<br>323640 A | 07-11-1997<br>05-01-1999<br>23-07-1998<br>01-04-1998<br>23-10-1997<br>08-06-1999<br>14-04-1998 |

EPO FORM P0460

Pour tout renseignement concernant cette annexe : voir Journal Officiel de l'Office européen des brevets, No.12/82